# EUROPEAN PATENT APPLICATION

(11) **EP 4 674 281 A1**
(43) Date of publication of application: **07.01.2026**
(21) Application number: 24763622.8
(22) Date of filing: 15.02.2024
(51) Int. Cl.: A23L 2/52, A23L 2/00, A23L 2/54, A23L 19/00, A23L 27/12, C12G 3/04

(54) **PACKAGED CITRUS-FLAVORED BEVERAGE**

(30) Priority: 02.03.2023 JP 2023032103
(71) Applicant: Asahi Group Holdings, Ltd., Tokyo 130-8602 (JP); Asahi Breweries, Ltd., Tokyo 130-8602 (JP)
(72) Inventor: INOUE, Akihiro, Moriya-shi, Ibaraki 302-0106 (JP); HAYASHI, Nobuaki, Moriya-shi, Ibaraki 302-0106 (JP); ENDO, Minori, Moriya-shi, Ibaraki 302-0106 (JP)
(74) Representative: Hoffmann Eitle
(86) International application number: PCT/JP2024/005178
(87) International publication number: WO 2024/181139

(57) **Abstract**

The purpose of the present invention is to provide a citrus-flavored beverage in which generation of deterioration odor over time is suppressed and masked without adverse effects on the flavor. The present invention provides a packaged citrus-flavored beverage containing the rind and/or seeds of citrus fruits.

## Description

### Technical Field

The present invention relates to a citrus-flavored beverage in which off-flavors are inhibited from occurring and thereby are masked.

### Background Art

Flavoring components such as citral contained in a citrus-flavored beverage are oxidized over time during storage and turn into off-flavor substances, which poses a problem of the occurrence of off-flavors after a long-term storage of the citrus-flavored beverage. In particular, a lemon-flavored beverage contains a large amount of citral as a flavoring component. When oxidized, this citral turns to off-flavor substances, p-cresol and p-methylacetophenone, so that the flavor of the lemon-flavored beverage deteriorates significantly after long-term storage. Therefore, for citrus-flavored beverages, especially for lemon-flavored beverages, measures have been taken such as reducing the amount of mixed oxygen as much as possible, setting a short best before date, and properly managing a storage temperature, but have not achieved sufficiently effects.

To solve these problems, various techniques have been developed. For example, Japanese Patent Application Publication No. 2016-116504 (Patent Literature 1) discloses a technique for inhibiting the generation of off-flavor substances. Japanese Patent Application Publication No. 2016-36319 (Patent Literature 2) discloses a technique for masking off-flavors having occurred by adjusting the concentration of cineol or cis-3-hexenol. Moreover, Japanese Patent Application Publication No. 2019-037171 (Patent Literature 3) discloses a technique for masking off-flavors of a citrus fruit after aging deterioration by adding a certain concentration of thymol.

### Citation List

### Patent Literatures

Patent Literature 1: Japanese Patent Application Publication No. 2016-116504
Patent Literature 2: Japanese Patent Application Publication No. 2016-36319
Patent Literature 3: Japanese Patent Application Publication No. 2019-037171

### Summary of Invention

### Problems to be solved by the invention

However, when a beverage is supplemented with an ingredient to inhibit off-flavors from occurring or an ingredient having an off-flavor masking effect, there is a problem in that the ingredient affects the flavor of the beverage to a certain extent. Therefore, an object of the present invention is to provide a citrus-flavored beverage which is inhibited from causing off-flavors over time to thereby mask the off-flavors without adversely affecting the flavor.

In the course of development of a new packaged beverage containing a fruit, the present inventors unexpectedly discovered phenomena under certain conditions in which the fruit was submerged in the beverage when the container was in a sealed state, but the fruit slowly floated up to the liquid surface of the beverage upon opening of the container. Then, focusing on these phenomena, the present inventors carried out intensive studies and completed the present invention.

Specifically, the present invention may be specified as follows.
[1] A packaged citrus-flavored beverage comprising a rind and/or seed of a citrus fruit.
[2] The packaged citrus-flavored beverage according to [1], further comprising a sarcocarp and/or albedo of a citrus fruit.
[3] The packaged citrus-flavored beverage according to the above [1], wherein the rind and/or seed of the citrus fruit comprises a dried rind and/or seed.
[4] The packaged citrus-flavored beverage according to the above [1], wherein the citrus fruit comprises a sour citrus fruit.
[5] The packaged citrus-flavored beverage according to the above [3], comprising a dried fruit as the dried rind, and/or seed or comprising a dried fruit in addition to the dried rind and/or seed.
[6] The packaged citrus-flavored beverage according to the above [5], which is a carbonated beverage, wherein a carbon dioxide content in the carbonated beverage is a gas volume such that the dried fruit is submerged in the carbonated beverage when the container is in a sealed state and such that the submerged dried fruit floats to a liquid surface of the carbonated beverage upon opening of the container.
[7] The packaged citrus-flavored beverage according to the above [6], wherein the dried fruit is in a sliced form and a thickness of the sliced dried fruit is 1.0 to 3.0 mm.
[8] The packaged citrus-flavored beverage according to the above [6], wherein the dried fruit is a dried fruit of a lemon, a lime, or an orange.
[9] The packaged citrus-flavored beverage according to the above [6], wherein the dried fruit is a sugar-coated dried fruit.
[10] The packaged citrus-flavored beverage according to the above [6], wherein the carbon dioxide content is 1.0 GV or more at 20°C.
[11] The packaged citrus-flavored beverage according to the above [6], wherein the container is a full-opening end can or a transparent container.
[12] The packaged citrus-flavored beverage according to any one of the above [6] to [8], wherein the dried fruit is produced by a hot air drying method.
[13] A method for inhibiting an off-flavor in a packaged citrus-flavored beverage, comprising adding a rind and/or seed of a citrus fruit.

According to the present invention, it is possible to provide a citrus-flavored beverage which is inhibited from causing off-flavors over time to thereby mask the off-flavors without adversely affecting the flavor.

### Brief Description of Drawings

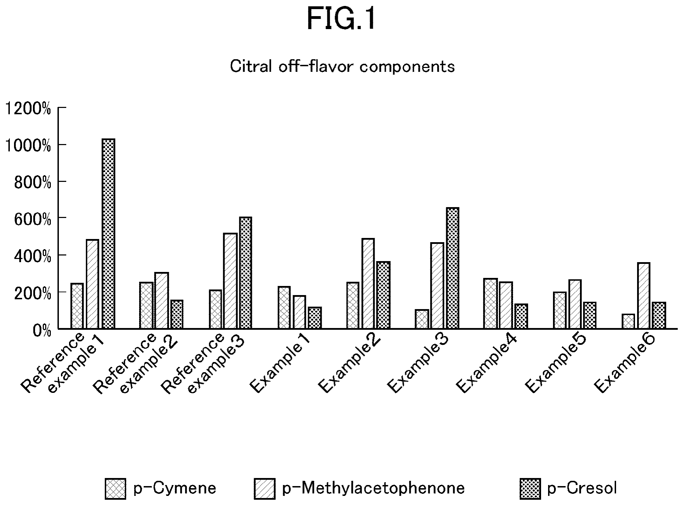

Fig. 1 is a graph showing percentages of component concentrations of citrus-flavored beverages stored at 60°C relative to component concentrations of citrus-flavored beverages stored at 4°C in Examples 1 to 3 and Comparative Examples 1 to 3.

### Description of Embodiments

### <Packaged Citrus-flavored Beverage>

A packaged citrus-flavored beverage in the present invention is characterized by containing a rind and/or seed of a citrus fruit. When the packaged citrus-flavored beverage contains the rind or seed of the citrus fruit, it is possible to inhibit off-flavors from occurring and therefore make it unlikely to notice the off-flavors (masking). In other words, the addition of a rind and/or seed of a citrus fruit to a packaged citrus-flavored beverage makes it possible to suppress off-flavors of the packaged citrus-flavored beverage and accordingly provide a method for suppressing off-flavors of a packaged citrus-flavored beverage. The term "citrus-flavored beverage" herein refers to a beverage provided with a citrus fruit flavor. The citrus-flavored beverage in the present invention contains citral, a typical component contained in citrus fruits, so that the citrus fruit flavor is imparted to the beverage.

The packaged citrus-flavored beverage in the present invention may contain a sarcocarp and/or albedo of a citrus fruit in addition to the rind and/or seed of the citrus fruit. The sarcocarp and albedo of the citrus fruit do not have a high off-flavor masking effect but are capable of inhibiting off-flavor components from occurring.

As the rind and/or seed of the citrus fruit, a dried rind and/or seed may be used. Use of the dried rind and/or seed is preferred because a higher off-flavor masking effect can be obtained. Here, the term "dried rind" refers to a rind that has been subjected to a drying process, and the term "dried seed" refers to a seed that has been subjected to a drying process. For the sake of convenience, "dried rind" and "dried seed", even in a state where they are impregnated with, for example, a carbonated beverage, are referred to as "dried rind" and "dried seed," respectively.

### <Citrus Fruits>

Types of citrus fruits are not particularly limited, and examples thereof include yuzu, sudachi, kabosu, lemon, lime, shikuwasa, daidai, jabara, buddha's hand, kumquat, orange, grapefruit, and so on. One type of citrus fruit may be used or two or more type of citrus fruits may be used. Among the citrus fruits, sour citrus fruits are preferred because they have a high off-flavor masking effect.

### <Dried Fruits>

The packaged citrus-flavored beverage in the present invention may also use a dried fruit as the rind and/or seed of the citrus fruit. Alternatively, the packaged citrus-flavored beverage may further contain a dried fruit in addition to the rind and/or seed of the citrus fruit.

The dried fruit used as the rind and/or seed of the citrus fruit may be a dried fruit of a lemon, a lime, or an orange.

A type of fruit as a raw material for a dried fruit contained in addition to the rind and/or seed of the citrus fruit is not particularly limited. For example, it is possible to appropriately select and use any of fruits commonly used in beverages, for example, citrus fruits such as lemon, lime, and orange, apple, blueberry, ume fruit (including pickled ume fruit), peach, strawberry, pineapple, grape, mango, fig, apricot, pear, banana, kiwifruit, and so on. Of these dried fruits, one type may be used or two or more types may be used. The dried fruit is preferably a dried fruit of a lemon, a lime, or an orange. In the case where the dried fruit is of a citrus fruit, the albedo and the exocarp may be contained or removed. Also in the case of a fruit other than the citrus fruits, the exocarp may be contained or removed.

In the present invention, the term "dried fruit" covers all types of fruit materials that have been subjected to the drying process. Even in a state where the dried fruit is impregnated with a carbonated beverage in the present invention, the fruit is referred to as the "dried fruit" for the sake of convenience.

The packaged citrus-flavored beverage in the present invention may contain a carbonated beverage and a dried fruit, and be characterized in that the dried fruit is submerged in the carbonated beverage when a container is in a sealed state, and the submerged dried fruit floats up to the liquid surface of the carbonated beverage upon opening of the container. Thus, it is possible to provide a packaged citrus-flavored beverage that is visually enjoyable upon opening of a container.

The state where a dried fruit is submerged in a carbonated beverage just has to be a state where the dried fruit does not float on the liquid surface of the carbonated beverage but is submerged in the carbonated beverage, and may be a state where the dried fruit lies down on the bottom of the container or a state where the dried fruit may be floating in the carbonated beverage. A time required for the dried fruit to float up to the liquid surface of the carbonated beverage after opening of the container is not particularly limited, but may be, for example, 0 (immediately after) to 120 seconds, 0.1 to 60 seconds, 0.5 to 30 seconds, or 1 to 10 seconds. After opening of the container, one can visually enjoy a movement of the dried fruit slowly floating upward.

The dried fruit after floating up may be kept floating on the liquid surface of the carbonated beverage, or be submerged again into the carbonated beverage. In addition, since the tissue of the dried fruit contained in the packaged citrus-flavored beverage in the present invention is impregnated with the carbonated beverage, the mouthfeel of the dried fruit may have different palatability than in a dried state with a low moisture content.

The form of the dried fruit is not particularly limited and can be, for example, a whole form, a sliced form, or a wedge-cut form.

In the case where the dried fruit is sliced, the thickness before drying may be 1.0 to 8.0 mm or 2.0 to 6.0 mm. In the present invention, a "thickness of a dried fruit" is defined as a thickness at a time point of addition of the dried fruit to a carbonated beverage for the sake of convenience, and the thickness of the dried fruit may be 0.5 to 5.0 mm or 1.0 to 3.0 mm. In addition, the dried fruit in the packaged citrus-flavored beverage in the present invention may have a thickness of 1.0 to 8.0 mm or more or 2.0 to 6.0 mm when the dried fruit is impregnated with the carbonated beverage.

The adjustment of the thickness of the dried fruit in the present invention within the above numeric value range makes the dried fruit less likely to be broken and enables easy control of a floating movement of the dried fruit.

Moreover, the "dried fruit" in the present invention may be sugar-coated. With sugar-coating, some type of dried fruit, even after the dried fruit submerged in the beverage is stored for a long period, can retain its shape and hardness at the time point of addition to a beverage or a similar shape and hardness more than otherwise. Thus, the sugar-coating supplements visual enjoyment upon opening of a container. In particular, when a sliced dried fruit submerged in a beverage is stored for a long period, the sliced dried fruit may become swollen like a Japanese food named *Fu* in some cases. For this reason, the dried fruit may be sugar-coated in order to maintain the beautiful appearance of the dried fruit. In addition, the strength of the dried fruit may be increased by the sugar-coating. For example, in manufacturing of packaged citrus-flavored beverages including processes of placing a dried fruit into each container, followed by gassing (a process of replacing the air inside the container with nitrogen for the purpose of oxidation prevention), and then adding a beverage to the container, the dried fruit having the strength thus increased may be prevented from being broken even when the dried fruit jumps up due to a nitrogen gas blown in the gassing and collides against the inner wall of the container. A saccharide used for the sugar-coating may be any of saccharides used commonly in this field without particular limitation, but may be, for example, sugar (sucrose), glucose, fructose, maltose, trehalose, and lactose.

A method for producing a dried fruit is not particularly limited. For example, the dried fruit in the present invention can be produced by using a general drying method such as a hot air drying method (air dry), a vacuum freeze drying method (freeze dry), or a vacuum drying method (vacuum dry). Since a dried fruit produced by the vacuum freeze drying method or the vacuum drying method is more porous and more difficult to submerge in a carbonated beverage than a dried fruit produced by the hot air drying method, it is preferable to use a dried fruit produced by the hot air drying method. Immediately after the drying process, the dried fruit in the present invention may have a moisture content of, for example, 20% by mass or less or 10% by mass or less.

A method for producing a sugar-coated dried fruit is not particularly limited. For example, the method may include a process in which a fruit (including a fresh fruit) having been immersed in a sugar liquid such as an aqueous solution containing the above saccharide is dried by the above drying method.

### <Carbonated Beverage>

A carbonated beverage in the present invention is not particularly limited as long as it is a beverage containing carbon dioxide. A carbon dioxide content in the carbonated beverage is not particularly limited as long as it is a gas volume such that the dried fruit is submerged in the carbonated beverage when a container containing the carbonated beverage and the dried fruit is in a sealed state and such that the submerged dried fruit floats to the liquid surface of the carbonated beverage upon opening of the container. The carbon dioxide content may be adjusted depending on, for example, the type, thickness, size, mass, and the like of the dried fruit. The carbonated beverage in the present invention may also be produced by a common method of injecting a carbon dioxide gas as needed under pressure into a non-carbonated beverage as a base. The carbon dioxide content at 20°C may be 0.5 GV or more, 1.0 GV or more, 1.5 GV or more, or 2.0 GV or more. On the other hand, the carbon dioxide content may be 5.0 GV or less or 4.0 GV or less. The carbon dioxide content in the carbonated beverage in the present invention may be a value measured with a GV tester commonly used in this field, for example, GVA-500B (manufactured by Kyoto Electronics Manufacturing Co., Ltd.).

In addition, the gas volume in the carbonated beverage is also restricted by the pressure resistance of the container and manufacturing conditions. For example, when heat sterilization is performed in the manufacturing process, the pressure inside the container during heating must be kept below the pressure resistance of the container, and accordingly the gas volume is more restricted than when heat sterilization is not performed. Moreover, the carbon dioxide gas itself has a bacteriostatic effect. For this reason, in the case where the pressure of the carbon dioxide inside a container is 98 kPa or more at 20°C and a beverage does not contain any plant or animal tissue component such as fruit juice, fruit, or milk, the beverage does not have to be subjected to the heat sterilization, so that a high gas volume may be set.

The carbonated beverage may be a non-alcoholic beverage or an alcoholic beverage. The beverage may be a beverage produced via a fermentation process or a beverage produced without the fermentation process. In the case where the carbonated beverage in the present invention is an alcoholic beverage, an alcohol by volume (concentration of ethanol volume) is not particularly limited, and can be determined as appropriate depending on targeted product quality. For example, the alcohol content in the carbonated beverage may be adjusted so that the alcohol by volume is 0.7% by volume or more, 1% by volume or more, 2% by volume or more, or 3% by volume or more. In the case where the carbonated beverage in the present invention is an alcoholic beverage, an extract by volume may be 0 to 15%, 1 to 10%, or 3 to 7%.

Moreover, the carbonated beverage in the present invention may contain a flavoring agent of a fruit such as the same of fruit as or a different type of fruit from the dried fruit contained in the packaged citrus-flavored beverage, or a flavoring agent other than fruit-based flavors.

The pH of the carbonated beverage in the present invention may be adjusted depending on the purposes such as controlling microorganisms and inhibiting deterioration of flavoring components. In general, the lower the pH of a beverage, the more difficult it is for microorganisms to grow. However, if the pH is too low, the sourness will be too strong. Moreover, some flavoring components may easily deteriorate if the pH is low. From the viewpoints of the sourness suitable as a beverage and deterioration inhibition of flavoring components, the pH of the carbonated beverage is preferably 2.0 or higher, more preferably 2.5 or higher, and further preferably 3.0 or higher. Meanwhile, in the case where the carbonated beverage in the present invention does not contain alcohol, the pH of the carbonated beverage is preferably 5.0 or lower, more preferably 4.0 or lower, and even more preferably lower than 4.0 with the microbial growth inhibition and the intensity of sterilization conditions taken into consideration. In the case where the carbonated beverage contains alcohol, the pH is preferably 6.5 or lower or more preferably 5.0 or lower.

For example, in the case where a beverage contains a large amount of a flavoring component that tends to more easily deteriorate as the pH becomes lower, it is preferable to set a relatively high pH of the carbonated beverage. For example, citral deteriorates more easily as the pH becomes lower. For this reason, in the case where a packaged citrus-flavored beverage in the present invention is a lemon-flavored beverage containing citral, the pH of the carbonated beverage is preferably 3.0 or higher or more preferably 3.5 or higher. More specifically, the pH is preferably 3.0 to 4.0 and particularly preferably 3.5 to 3.7 because such pH makes it possible to sufficiently inhibit microbial growth and easily achieve a sour taste favorable as a lemon flavor.

### <<Optional Ingredients that may be Contained>>

The carbonated beverage in the present invention may contain optional ingredients such as alcoholic beverages, carbonated water, fruits, vegetables, herbs, saccharides, flavoring agents, other food ingredients, and food additives. The optional ingredients will be described below.

The alcoholic beverages as the optional ingredients include alcohol as a raw material; distilled alcohol such as vodka, whiskey, brandy, shochu, rum, spirit, and gin; brewed alcohol such as wine, cider, beer, and sake; mixed alcohol such as liqueur and vermouth; and so on. The carbonated beverage may contain one type of alcoholic beverage or two or more types of alcoholic beverages. In the case where the packaged citrus-flavored beverage according to the present invention is a carbonated beverage of a liquid containing a mixture of an alcoholic beverage and a food ingredient, the beverage is classified as a liqueur (extract by volume of 2% or higher) or a spirit (extract by volume of less than 2%) under the Liquor Tax Act of Japan (enforced on April 1, 2018).

The fruits, vegetables, and herbs as the optional ingredients are not particularly limited and an appropriate fruit or the like commonly used may be selected and used. The carbonated beverage may contain one type of fruit, vegetable, or herb or two or more types of fruits, vegetables, and herbs.

The carbonated beverage may contain chopped pieces of a fruit or the like as they are, or may contain a juice such as a fruit juice or vegetable juice added as an ingredient. Fruit juices are defined in Japan by the Japanese Agricultural Standard for Fruit Drinks, and internationally by the Codex Standard for Fruit Juices and Nectars (CODEX STAN 247-2005). As the fruit, a concentrated fruit juice, a fruit juice from concentrate, or the like may be used, or a clarified fruit juice from which some of insoluble solids have been removed may be used. As the fruit or vegetable, a fruit extract or vegetable extract may be added as an ingredient. In particular, a packaged citrus-flavored beverage preferably contains a fruit juice or extract of a fruit such as the same type of fruit as the dried fruit contained in the packaged citrus-flavored beverage. A fruit extract or vegetable extract is an extra obtained by extracting components contained in a fruit or vegetable from chopped pieces of the fruit or vegetable using water or alcohol. These extracts are manufactured, for example, by a method such as a hot water extraction method or a method of extracting fruit components by washing with a liquefied gas, and then vaporizing the liquefied gas to separate and recover the fruit components.

The saccharides (a general term for monosaccharides and disaccharides) as the optional ingredients may include sugar (sucrose), glucose, fructose, isomerized sugar, and so on. When added to a carbonated beverage, such a saccharide can impart sweetness and a full-bodied taste to the beverage. The carbonated beverage may contain one type of saccharide or two or more types of saccharides.

Examples of the flavoring agents and the other food ingredients as the optional ingredients include dietary fiber, yeast extract, protein or its hydrolysate, and so on. Among them, water-soluble dietary fiber is widely used to impart a full-bodied taste and other functional properties to beverages. The water-soluble dietary fiber means carbohydrate that is soluble in water and is not or is poorly digested by human digestive enzymes. Examples of the water-soluble dietary fiber include soybean dietary fiber, polydextrose, indigestible dextrin, galactomannan, inulin, hydrolyzed guar gum, pectin, gum arabic, and so on. Of these water-soluble dietary fibers, one type may be used or two or more types may be used.

As the food additives as the optional ingredients, any food additive permitted under national laws and regulations may be used and the range of food additives is not particularly limited. For example, preservatives, antioxidants, and the like to maintain food quality, colorants, flavoring agents, sweeteners, acidulants, emulsifiers, and the like to improve food palatability, pH adjusters, antifoaming agents, foaming agents, and the like necessary for food manufacturing or processing, and nutritional enhancers used to supplement or enhance nutritional components may be contained as necessary.

Some of the food additives will be briefly described.

The colorants are food additives for improving the color tones of foods and are broadly divided into chemical synthetic colorants and natural colorants. Under the Food Sanitation Law of Japan, they are classified into designated additives, existing additives, and general food and beverage additives. As the colorant, a caramel colorant, which gives a food a brown color, is often used. The caramel colorant also has a secondary effect of imparting a roasted flavor, richness, or the like to beverages.

The flavoring agents are used to impart flavors to foods or enhance the flavors. Food flavoring agents include natural flavoring agents extracted from natural substances and synthetic flavoring agents chemically synthesized. The natural flavoring agents are defined as "substances obtained from animals or plants or mixtures thereof which are additives used for flavoring food" under the Food Sanitation Law of Japan. Examples of the names of usable plants and animals are listed in the "List of original source plants and animals of natural flavoring agents". Furthermore, most of synthetic flavoring agents are chemically synthesized compounds made from the same components as those present in foods, and are specified in "Appendix 1 of the Enforcement Regulations of the Food Sanitation Law".

The food flavoring agents are each rarely used alone, but are usually used as a compound product including a combination of multiple flavoring compounds. The forms of flavoring products include water-soluble flavoring agents, oil-soluble flavoring agents, emulsion flavoring agents, powder flavoring agents, and the like. The water-soluble flavoring agent is an agent obtained by extracting and dissolving a flavoring base in a water-soluble solvent such as a water-containing alcohol or propylene glycol. The oil-soluble flavoring agent is an agent obtained by dissolving a flavoring base in a vegetable oil or the like. The emulsion flavoring agent is an agent containing fine particles of a flavoring base emulsified in water by using an emulsifier and a stabilizer. Some of the emulsion flavoring agents make beverages to look cloudier and are also called cloudifiers. The powder flavoring agent is an agent of powder obtained by spraying and drying an emulsion containing a flavoring base with an excipient such as dextrin, natural gum, saccharide, or starch, or by attaching the flavoring base to a substance such as lactose. In general, a water-soluble flavoring agent and an emulsion flavoring agent are used for beverages.

The sweeteners are used for the purpose of sweetening foods. The above-listed saccharides and some low-sweetness substances (such as starch syrup, erythritol, maltitol, and lactitol) are classified as foods, not as food additives. Regarding substances classified as food additives, low-sweetness substances include L-arabinose, D-xylose, trehalose, D-sorbitol, xylitol, mannitol, and so on, while high-sweetness substances include aspartame, neotame, acesulfame potassium, saccharin, sucralose, disodium glycyrrhizinate, stevia extract, licorice extract, thaumatin, and so on. Under the Food Sanitation Law of Japan, the sweeteners are classified into designated additives, existing additives, and general food and beverage additives. In beverages, aspartame, acesulfame potassium, sucralose, and the like, which have sweetening properties similar to those of saccharides traditionally used in beverages such as sugar, glucose, and fructose, are often used. Also in the carbonated beverage in the present invention, it is preferable to use one or more types of these sweeteners commonly used in beverages.

The acidulants are used to impart a sour taste to foods or enhance the sour taste. The acidulants include organic acids such as citric acid and lactic acid and their salts, and inorganic acids such as phosphoric acid and carbon dioxide. A combined use of an organic acid and a salt thereof makes it easier to retain a specific pH level through their buffering effect.

In Japan, the substances that can be indicated by their group name, that is, an acidulant, include the following designated food additives: adipic acid, citric acid, trisodium citrate, glucono-delta-lactone, gluconic acid, potassium gluconate, sodium gluconate, succinic acid, monosodium succinate, disodium succinate, sodium acetate, DL-tartaric acid, L-tartaric acid, sodium DL-tartrate, sodium L-tartrate, carbon dioxide, lactic acid, sodium lactate, glacial acetic acid, fumaric acid, monosodium fumarate, DL-malic acid, sodium DL-malate, and phosphoric acid; and the following existing food additives: itaconic acid, phytic acid, and α-ketoglutaric acid.

An acidulant used in beverages is selected depending on a taste (flavor) of the beverages. For example, citric acid and citrates, which are abundant in citrus fruits, are often selected for citrus-flavored beverages, tartaric acid and tartrates, which are abundant in grapes, are often selected for grape-flavored beverages, and malic acid and malates, which are abundant in apples, are often selected for apple-flavored beverages.

The emulsifiers are used in foods for emulsification, dispersion, penetration, cleaning, foaming, defoaming, and release, whereas the emulsifiers are used in beverages often for dispersion (emulsification) of an oil in a liquid. For example, the emulsifier is used to uniformly disperse a hydrophobic component in water or inhibit separation of an oil or fat component derived from an ingredient.

The above-listed food ingredients and food additives are just examples. Ingredients and/or additives that can be contained in a packaged citrus-flavored beverage according to the present invention are not limited to the above examples. The types and contents of food ingredients and food additives used may be appropriately selected and adjusted according to the purpose.

### <Container>

A container used for a packaged citrus-flavored beverage in the present invention is not particularly limited. Two-piece beverage cans, three-piece beverage cans, bottle cans, flexible containers, glass bottles, and so on can be used. As the flexible containers, there are containers in bottle or similar shapes made by molding flexible resins such as polyethylene (PE), polypropylene (PP), ethylene-vinyl alcohol copolymer (EVOH), polyethylene terephthalate (PET), and the like. The flexible container may be made of a single-layer resin or a multi-layer resin.

The container may be a full-opening end can or a transparent container in order to allow one to visually enjoy, for example, a movement of a dried fruit floating up from the bottom in a carbonated beverage. The container may be a full-opening end can in order that the aperture through which a dried fruit is to be placed in the container will not restrict the size of the dried fruit to be placed too much.

Hereinafter, the present invention will be described in more details based on Examples, but the present invention should not be limited to these Examples.

### [Examples]

### (Examples 1 to 3 and Comparative Examples 1 to 3)

Each of samples was prepared by adding one of parts of citrus fruits (added ingredient) specified in Table 1 to a commercially available citrus-flavored beverage (Asahi Breweries, Ltd., Clear Cooler Strong Lemon & Lime Sour) and resealing the container. Here, one slice of dried lemon (lemon slice (air dry)) (2 to 3 g), one slice of fresh lemon (lemon slice (fresh)) (7 g), and 2g of the other parts were added.

For each example, samples stored at 4°C for 3 days and samples stored at 60°C for 3 days were prepared and a comparative sensory test and quantification of off-flavor components were carried out. In the comparative sensory test, five expert panelists evaluated the intensities of fresh lemon flavor and off-flavors. The results are shown in Table 1. The intensity of the fresh lemon flavor was evaluated by comparing it with a control sample stored at 4°C for 3 days, and rated on a 3-point scale: almost same, slightly weak, and quite weak. On the other hand, the off-flavor evaluation (off-flavor) was made on a 5-point scale (1: weakest to 5: strongest), and was scored with an average of the values determined based on Comparative Example 1 where the samples stored at 4°C for 3 days and at 60°C for 3 days were set to "1" and "5", respectively.

The off-flavor components quantified were p-cymene, p-methylacetophenone, and p-cresol, which are known to be off-flavor components of citral, the characteristic flavor components of citrus fruits.

The quantitative analysis of the off-flavor components was carried out in the following method.

To 20 g of each of the beverages, 100 µL of an aqueous solution of 100 ppm 2-octanol was added as an internal standard substance and 100 µL of ethanol was added. The resultant mixture was diluted with 20 mL of pure water, followed by stirring for 5 to 10 minutes with a stirrer. The entire amount of the sample was poured into a solid phase and adsorbed onto the solid phase. Approximately 25 mL of pure water was poured through the column to remove excess components that passed through, and the column was dehydrated by passing air through the column for 30 minutes or longer. After elution with 5 mL of dichloromethane, the resultant was dehydrated by adding about 1 g of sodium sulfate, concentrated to 400 µL by nitrogen purging, and subjected to GC/MS analysis under the following conditions. The quantification was performed using a calibration curve prepared by adding a standard substance. Fig. 1 shows percentages of the component concentrations in the beverages stored at 60°C relative to the component concentrations in the beverages stored at 4°C.

### (GC/MS Analysis Conditions)

The column used was DB-WAX (60 m×0.25 mm ID; 0.25 µm F.T.) (manufactured by J&W), and 1.0 µL (split ratio 30:1) was injected (injection port temperature: 250°C). After being held at 40°C for 1 minute, the column was heated at a rate of 5°C/min to a temperature of 210°C and held for 5 minutes. Helium gas (flow rate: 1.2 mL/min) was used as a carrier gas.

**[Table 1]**

| | Comparative Example 1 | | Comparative Example 2 | | Comparative Example 3 | |
|---|---|---|---|---|---|---|
| Added Ingredient | None | | Sarcocarp (Air Dry) | | Albedo (Air Dry) | |
| Storage Temperature | 4°C | 60°C | 4°C | 60°C | 4°C | 60°C |
| Fresh Lemon Flavor | | Quite Weak | | Almost Same | | Quite Weak |
| Off-Flavor | 1.0 | 5.0 | 1.0 | 4.0 | 1.0 | 4.6 |

| | Example 1 | | Example 2 | | Example 3 | |
|---|---|---|---|---|---|---|
| Added Ingredient | Lemon Slice (Air Dry) | | Rind (Air Dry) | | Seed (Air Dry) | |
| Storage Temperature | 4°C | 60°C | 4°C | 60°C | 4°C | 60°C |
| Fresh Lemon Flavor | | Almost Same | | Almost Same | | Slightly Weak |
| Off-Flavor | 1.0 | 2.4 | 1.0 | 2.8 | 1.0 | 2.8 |

| | Example 4 | | Example 5 | | Example 6 | |
|---|---|---|---|---|---|---|
| Added Ingredient | Lime Slice (Air Dry) | | Orange Slice (Air Dry) | | Lemon Slice (Fresh) | |
| Storage Temperature | 4°C | 60°C | 4°C | 60°C | 4°C | 60°C |
| Fresh Lemon Flavor | | Slightly Weak | | Quite Weak | | Slightly Weak |
| Off-Flavor | 1.0 | 2.6 | 1.0 | 3.4 | 1.0 | 3.4 |

From the results shown in the graph in Fig. 1, it is seen that all the parts of the citrus fruits have the generation inhibitory effect on the off-flavor components, especially p-cresol. On the other hand, it is also observed that the sarcocarp has the higher generation inhibitory effect on the off-flavor components than the other parts have, but does not have the high off-flavor masking effect as indicated by the results in Table 1. In addition, the albedo does not either have the high off-flavor masking effect.

Therefore, it was found that the addition of the rinds, seeds, and slices containing the rinds (and seeds) of the citrus fruits makes it possible to inhibit the occurrence of the off-flavors and also inhibit sensory displeasure of the off-flavors (in other words, masking). In particularly, it is seen that the sour citrus fruits such as lemon and lime have the high off-flavor suppression effect and the dried products have the higher off-flavor suppression effect.

In addition, the addition of the citrus fruit to the citrus-flavored beverages does not adversely affect the flavors.

### (Reference Examples)

### 1. Preparation of Base Liquid

A base liquid with an alcohol by volume of 6%, an extract by volume of 3.5%, and a pH of 3.5 was prepared by mixing ingredients as specified in Table 2.

**[Table 2]**

| Ingredients | Amount |
|---|---|
| Alcohol as Raw Material (Alcohol by Volume: 95.3%) | 66.5 ml |
| 55% Fructose Glucose Liquid Sugar | 37.0 g |
| Citric Acid (Anhydrous) | 3.0 g |
| Trisodium Citrate | 2.0 g |
| Flavoring Agent | 1.0 g |
| Added Water (Distilled Water) | |
| Total | 1000 ml |

### 2. Experiment (1)

The present experiment used dried lemons (1 mm-thick) each obtained by drying a 3 mm-thick fresh lemon slice with hot air.

Next, packaged beverage samples were each produced by adding carbon dioxide to the base liquid to prepare a beverage having a carbon dioxide content (GV) specified in Table 3, placing one slice of the dried lemon in a beverage can, then filling the can with the beverage, and seaming a full-opening end can lid.

The produced packaged beverage samples were left to stand and stored at 25°C for 48 hours, and then were opened. It was visually checked whether or not the submerged dried lemon floated up to the beverage surface upon the opening. The results are presented in Table 3. Floating-up evaluations were made such that a sample in which the submerged dried lemon floated up to the beverage surface after the opening was rated as "∘", and a sample in which the submerged dried lemon did not float up but remained submerged after the opening was rated as "×".

**[Table 3]**

| Sample No. | 1 | 2 | 3 | 4 | 5 | 6 | 7 | 8 |
|---|---|---|---|---|---|---|---|---|
| GV (20°C) | 0.0 | 0.1 | 0.5 | 1.0 | 1.5 | 2.0 | 2.3 | 2.6 |
| Floating-up Evaluation | × | × | × | ○ | ○ | ○ | ○ | ○ |

This experiment confirmed that the control to cause the dried lemon to desirably move can be achieved with the adjustments of the thickness of the dried lemon and the gas volume in the carbonated beverage.

### 3. Experiment (2)

The present experiment was carried out in the same manner as in the above experiment (1) except that dried lemons (2 mm thick) each obtained by drying a 6 mm-thick fresh lemon slice with hot air were used. The results are presented in Table 4.

**[Table 4]**

| Sample No. | 9 | 10 | 11 | 12 | 13 | 14 | 15 | 16 |
|---|---|---|---|---|---|---|---|---|
| GV (20°C) | 0.0 | 0.1 | 0.5 | 1.0 | 1.5 | 2.0 | 2.3 | 2.6 |
| Floating-up Evaluation | × | × | × | × | × | ○ | ○ | ○ |

This experiment confirmed that the control to cause the dried lemon to desirably move can be achieved with the adjustment of the gas volume in the carbonated beverage depending on the thickness of the dried lemon.

### 4. Experiment (3)

Each fresh fruit specified in Table 5 was sliced to a thickness before drying specified in Table 5 and dried with hot air to obtain the dried fruit. However, whole blueberries without slicing and a whole pickled ume with its seed removed were dried by hot air under the same conditions to obtain samples (samples 22 and 23). The diameter of the dried picked ume was about 35 mm.

Next, packaged beverage samples were each produced by adjusting the carbon dioxide content of the base liquid to a carbon dioxide content (GV) specified in Table 5, filling the beverage can with the resultant base liquid, then placing one of the dried fruits in the beverage can, and seaming a full-opening end can lid after confirming that the dried fruit was submerged.

The produced packaged beverage samples were left to stand and stored at 25°C for 48 hours, and then were opened. It was visually checked whether or not each submerged dried fruit floated up to the beverage surface upon the opening. The evaluations were made in the same manner as in the above experiment (1).

**[Table 5]**

| Sample No. | 17 | 18 | 19 | 20 | 21 | 22 | 23 | 24 |
|---|---|---|---|---|---|---|---|---|
| Fruit | Lime | Orange | Orange | Apple (Red) | Apple (Green) | Blueberry | Pickled Ume (No Seed) | Peach |
| Form | Slice | Slice | Slice | Slice | Slice | Whole | Whole | Slice |
| Thickness Before Drying [mm] | 6 | 5 | 6 | 3 | 3 | - | - | 6 |
| Thickness After Drying [mm] | 2.5 | 2.0 | 2.0 | 1.0 | 1.0 | | | 1.0 |
| GV (20°C) | 2.3 | 2.3 | 2.3 | 2.3 | 2.3 | 2.3 | 2.3 | 2.3 |
| Floating-up Evaluation | ○ | ○ | ○ | ○ | ○ | ○ | ○ | ○ |

This experiment confirmed that the control to cause each dried fruit to desirably move can be achieved with the adjustment of the gas volume in the carbonated beverage regardless of the type of fruit.

### 5. Experiment (4)

The present experiment used a sugar-coated dried lemon (2 mm thick) obtained by immersing a 6 mm-thick fresh lemon slice in a 10% glucose aqueous solution and then drying it with hot air, and a dried lemon (2 mm thick) obtained by drying a 6 mm-thick fresh lemon slice with hot air without immersing it in a 10% glucose aqueous solution.

Next, packaged beverage samples were each produced by adding carbon dioxide to the base liquid to prepare a beverage with 2.3 GV, filling a beverage can in which one slice of the sugar-coated dried lemon was placed or a beverage can in which one slice of the dried lemon was placed with the beverage, and then seaming a full-opening end can lid.

The packaged beverage samples thus produced were sterilized at 65°C for 20 minutes, then left to stand and stored at 37°C for one week, and then opened. After the opening, the state of each dried fruit was checked.

The test results showed that the packaged beverage sample containing the sugar-coated dried lemon maintained the shape and firmness of the dried fruit as compared to the packaged beverage sample containing the dried lemon.

### 6. Experiment (5)

The present experiment used sugar-coated dried lemons (2 mm thick) each obtained by immersing a 6 mm-thick fresh lemon slice in a 10% glucose aqueous solution and then drying it with hot air, and dried lemons (2 mm thick) each obtained by drying a 6 mm-thick fresh lemon slice with hot air without immersing it in a 10% glucose aqueous solution.

Then, after one slice of the sugar-coated dried lemon and one slices of the dried lemon were placed in beverage cans, respectively, a nitrogen gas was blown into the inside of each of the cans to replace the air inside the can with nitrogen. In this process, the dried fruit collided against the inner wall of the can. Under each of the conditions, the test was performed on 10 samples, and whether the dried fruit was broken or not was checked.

In the test results, it was observed that the dried fruits were not broken the samples in which the sugar-coated dried lemons were placed, but the dried fruits were broken in 8 samples among the 10 samples in which the dried lemons were placed.

## Claims

1. A packaged citrus-flavored beverage comprising a rind and/or seed of a citrus fruit.

2. The packaged citrus-flavored beverage according to claim 1, further comprising a sarcocarp and/or albedo of a citrus fruit.

3. The packaged citrus-flavored beverage according to claim 1, wherein the rind and/or seed of the citrus fruit comprises a dried rind and/or seed.

4. The packaged citrus-flavored beverage according to claim 1, wherein the citrus fruit comprises a sour citrus fruit.

5. The packaged citrus-flavored beverage according to claim 3, comprising a dried fruit as the dried rind and/or seed, or comprising a dried fruit in addition to the dried rind and/or seed.

6. The packaged citrus-flavored beverage according to claim 5, which is a carbonated beverage, wherein a carbon dioxide content in the carbonated beverage is a gas volume such that the dried fruit is submerged in the carbonated beverage when the container is in a sealed state and such that the submerged dried fruit floats to a liquid surface of the carbonated beverage upon opening of the container.

7. The packaged citrus-flavored beverage according to claim 6, wherein the dried fruit is in a sliced form and a thickness of the sliced dried fruit is 1.0 to 3.0 mm.

8. The packaged citrus-flavored beverage according to claim 6, wherein the dried fruit is a dried fruit of a lemon, a lime or an orange.

9. The packaged citrus-flavored beverage according to any one of claims 6 to 8, wherein the dried fruit is a sugar-coated dried fruit.

10. The packaged citrus-flavored beverage according to claim 6, wherein the carbon dioxide content is 1.0 GV or more at 20°C.

11. The packaged citrus-flavored beverage according to claim 6, wherein the container is a full-opening end can or a transparent container.

12. The packaged citrus-flavored beverage according to any one of claims 6 to 8, wherein the dried fruit is produced by a hot air drying method.

13. A method for inhibiting an off-flavor in a packaged citrus-flavored beverage, comprising adding a rind and/or seed of a citrus fruit.
